# EUROPEAN PATENT APPLICATION

(11) **EP 4 517 649 A1**
(43) Date of publication of application: **05.03.2025**
(21) Application number: 23796023.2
(22) Date of filing: 04.04.2023
(51) Int. Cl.: G06T 5/00, G06T 1/00, G08G 1/00, H04N 7/18

(54) **INFORMATION PROCESSING DEVICE, INFORMATION PROCESSING METHOD, AND PROGRAM**

(30) Priority: 26.04.2022 JP 2022072603
(71) Applicant: Kyocera Corporation, Kyoto-shi, Kyoto 612-8501 (JP)
(72) Inventor: WATANABE, Masato, Kyoto-shi, Kyoto 612-8501 (JP); HATTORI, Shigeto, Kyoto-shi, Kyoto 612-8501 (JP)
(74) Representative: Viering, Jentschura & Partner mbB Patent- und Rechtsanwälte
(86) International application number: PCT/JP2023/013905
(87) International publication number: WO 2023/210276

(57) **Abstract**

An information processing apparatus (100) according to one of aspects includes: an extractor (151) configured to extract a first region having brightness equal to or greater than predetermined brightness in an image shown by image data (D10) imaged by a moving body; a converter (152) configured to convert extraction data (D30) of the first region extracted into first brightness lower than the predetermined brightness; and an output unit (153) configured to output the image data (D10) in which the extraction data (D30) converted is reflected.

## Description

### TECHNICAL FIELD

The present application relates to an information processing apparatus, an information processing method, and a program.

### BACKGROUND OF INVENTION

Autonomous driving vehicles are remotely monitored. Patent Document 1 discloses a monitoring control system that includes a server device that receives image data consisting of a key frame inserted at a predetermined interval and a difference frame from an image captured by a camera of a moving body and controls transmission of an emergency control signal based on a reception state of the key frame.

### CITATION LIST

### PATENT LITERATURE

Patent Document 1: JP 2019-3403 A

### SUMMARY

### PROBLEM TO BE SOLVED

A conventional remote monitoring system allows for detection in an emergency and support in an emergency by causing an observer from a remote place to monitor videos from a plurality of moving bodies. Unfortunately, the remote monitoring system causes the observer to monitor the videos from the moving bodies in real time, thus causing the observer to accumulate fatigue when the videos include high-brightness videos. Accordingly, there is a need for the remote monitoring system to reduce accumulation of fatigue of an observer who monitors image data imaged by moving bodies.

### SOLUTION TO PROBLEM

An information processing apparatus according to one of aspects includes: an extractor configured to extract a first region having brightness equal to or greater than predetermined brightness in an image shown by image data imaged by a moving body; a converter configured to convert extraction data of the first region extracted into first brightness lower than the predetermined brightness; and an output unit configured to output the image data in which the extraction data converted is reflected.

An information processing method according to one of the aspects includes: at a computer, extracting a first region having brightness equal to or greater than predetermined brightness in an image shown by image data imaged by a moving body; converting extraction data of the first region extracted into first brightness lower than the predetermined brightness; and outputting the image data in which the extraction data converted is reflected.

A program according to one of the aspects causes a computer to execute: extracting a first region having brightness equal to or greater than predetermined brightness in an image shown by image data imaged by a moving body; converting extraction data of the first region extracted into first brightness lower than the predetermined brightness; and outputting the image data in which the extraction data converted is reflected.

### BRIEF DESCRIPTION OF THE DRAWINGS

FIG. 1 is a diagram for explaining an outline of a system including an information processing apparatus according to the embodiment.
FIG. 2 is a diagram illustrating an example of an outline of processing of image data of the information processing apparatus according to the embodiment.
FIG. 3 is a configuration diagram illustrating an example of a configuration of a moving body illustrated in FIG. 1.
FIG. 4 is a diagram illustrating an example of a configuration of the information processing apparatus illustrated in FIG. 1.
FIG. 5 is a diagram illustrating an example of learning image data and additional data.
FIG. 6 is a diagram for explaining an extraction example where a first region is extracted from an image shown by image data.
FIG. 7 is a diagram for explaining another extraction example where the first region is extracted from the image shown by the image data.
FIG. 8 is a diagram illustrating an example of a method of extracting the first region of the information processing apparatus.
FIG. 9 is a flowchart illustrating an example of a processing procedure executed by the moving body according to the embodiment.
FIG. 10 is a flowchart illustrating an example of a processing procedure executed by the information processing apparatus according to the embodiment.
FIG. 11 is a flowchart illustrating an example of a processing procedure of conversion processing illustrated in FIG. 10.
FIG. 12 is a diagram illustrating an example of a cruising route of the moving body.
FIG. 13 is a flowchart illustrating an example of a processing procedure of collection processing executed by the information processing apparatus according to the embodiment.

### DESCRIPTION OF EMBODIMENTS

A plurality of embodiments for implementing an information processing apparatus, an information processing method, and a program according to the present application will be described in detail with reference to the drawings. Note that the present application is not limited by the following description. Constituent elements in the following description include those that can be easily assumed by a person skilled in the art, those that are substantially identical to the constituent elements, and those within a so-called range of equivalents. In the following description, the same reference signs may be assigned to the same constituent elements. Redundant description may be omitted.

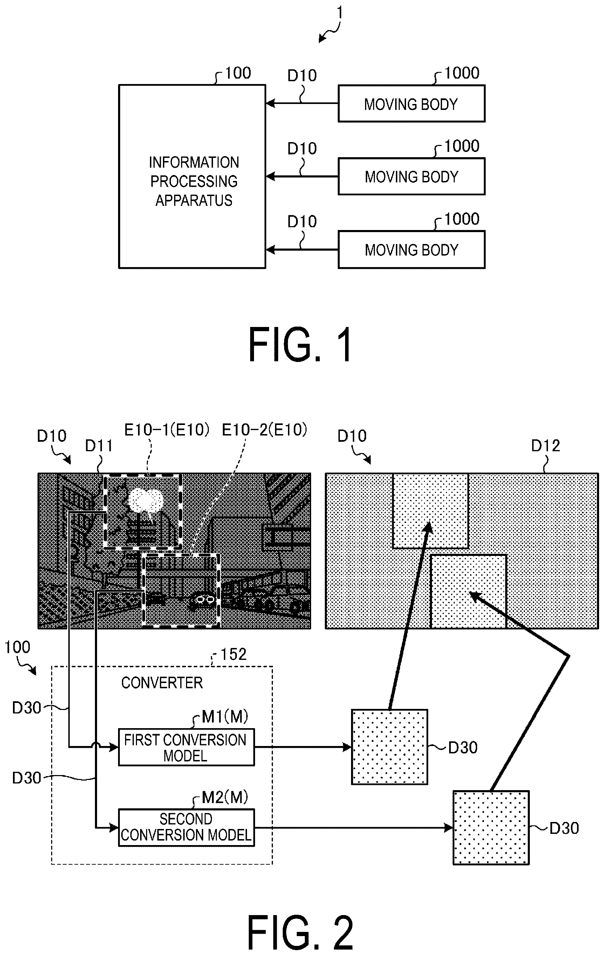

FIG. 1 is a diagram for explaining an outline of a system including the image processing apparatus according to the embodiment. As illustrated in FIG. 1, a system 1 includes an information processing apparatus 100 and a plurality of moving bodies 1000. The system 1 is a remote monitoring system in which the information processing apparatus 100 can monitor at a remote place the plurality of moving bodies 1000. In the system 1, the information processing apparatus 100 and the plurality of moving bodies 1000 are communicably connected to each other via an unillustrated network. Note that the information processing apparatus 100 and the plurality of moving bodies 1000 have a one-to-many relationship in the system 1 in the present embodiment. However, the information processing apparatus 100 and the moving body 1000 may have a one-to-one relationship. In the present disclosure, the functions of the information processing apparatus 100 described below may be mounted on the moving body 1000.

The information processing apparatus 100 is an apparatus that can monitor the plurality of moving bodies 1000 at a remote place. The information processing apparatus 100 is an apparatus that can, for example, process and display image data D10 imaged by the plurality of moving bodies 1000. The information processing apparatus 100 is, for example, a server apparatus that is provided outside the moving body 1000. The information processing apparatus 100 displays in real time the image data D10 (video) transmitted by the moving body 1000. The image data D10 includes, for example, two-dimensional images such as moving images and still images. The present embodiment will describe a case where the image data D10 is a still image for simplicity of description.

The moving bodies 1000 include, for example, vehicles that can move by automatic traveling, manual traveling by a driver, or the like. The vehicles include, for example, buses, trucks, and passenger cars. The present embodiment will describe a case where the moving bodies 1000 are vehicles that automatically travel on cruising routes. However, the moving bodies 1000 are not limited thereto. The moving bodies 1000 may be trains, airplanes, ships, drones, spacecrafts, or the like. The cruising route is a route along which the moving body 1000 periodically moves. The moving body 1000 includes an imaging device that images the surroundings of the imaging device. The moving body 1000 has a function of transmitting the image data D10 imaged by the imaging device to the information processing apparatus 100. That is, the moving body 1000 can transmit to the information processing apparatus 100 the image data D10 imaged at the same position and in different traffic environments such as a daytime, a nighttime, a sunny weather, and a rainy weather.

The information processing apparatus 100 enables an observer to check a situation around the moving body 1000 by displaying in real time the image data D10 transmitted by the moving body 1000. The information processing apparatus 100 can divide and simultaneously display a plurality of pieces of the image data D10 transmitted by the plurality of moving bodies 1000 on a display screen. Thus, the information processing apparatus 100 allows for detection in an emergency or support in an emergency by causing an observer from a remote place to monitor automatic driving or the like of the moving body 1000.

In the system 1, when the information processing apparatus 100 displays the image data D10 transmitted by the moving body 1000 as is, if the image data D10 includes an image that the observer feels dazzling, there is a probability that the observer undergoes accumulation of the degree of fatigue associated with the dazzle, and quality of monitoring lowers. When the information processing apparatus 100 decreases the brightness of the image data D10 transmitted by the moving body 1000 and displays the image data D10, the quality of monitoring of important portions such as a brake lamp in front of the moving body 1000 may lower. According to the present embodiment, the information processing apparatus 100 can suppress accumulation of fatigue of the observer who monitors the image data D10 imaged by the moving body 1000 without decreasing the quality of monitoring.

FIG. 2 is a diagram illustrating an example of an outline of processing of the image data D10 of the information processing apparatus 100 according to the embodiment. As illustrated in FIG. 2, the information processing apparatus 100 extracts a first region E10-1 and a first region E10-2 having brightness equal to or greater than the predetermined brightness in an image D11 shown by the imaged image data D10. The predetermined brightness can be set to, for example, brightness at which the observer feels dazzling. The first region E10-1 is a region that includes imaging objects such as a streetlight and a headlight of an oncoming vehicle having higher brightness than that of the first region E10-2. The first region E10-2 is a region that includes imaging objects such as tail lamps of the vehicles having the predetermined brightness or more. In the following description, if the first region E10-1 and the first region E10-2 do not need to be distinguished from each other, the first region E10-1 and the first region E10-2 will be simply referred to as a first region E10.

The information processing apparatus 100 includes a converter 152 that converts extraction data D30 of the extracted first region E10 into first brightness lower than the predetermined brightness. The first brightness can be set to, for example, brightness lower than the predetermined brightness at which the observer does not feel dazzling, brightness desired by the observer, or the like. The converter 152 includes a conversion model M machine-learned to convert a plurality of pieces of learning image data having an imaging condition different from that of the extraction data and having a feature of the extraction data D30 into the first brightness. The imaging condition includes, for example, a time zone, a date and time, and weather when an image is imaged. The learning image data is data that has the features of the extraction data D30 and indicates an image imaged under the imaging condition different from that of the extraction data D30 (image data D10). An example of the learning image data will be described later.

For example, the converter 152 may decrease the brightness of the streetlight and suppress a decrease in the brightness of at least one selected from the group consisting of a traffic light, a lamp of a car, a light of a construction site, and a light emitter worn by a person compared to the brightness of the streetlight. That is, the converter 152 decreases the brightness of a portion such as a streetlight that is less important for safety during movement of the moving body 1000 among the portions of the image D11 that the observer feels dazzling. However, the converter 152 suppresses a decrease in the brightness of an object such as the traffic light, the lamp of the car, the light of the construction site, or the light emitter worn by the person that is important for safety during movement of the moving body 1000.

The conversion model M includes a first conversion model M1 and a second conversion model M2. The first conversion model M1 is a machine learned model machine-learned to convert learning image data into the first brightness. The first conversion model M1 converts the input extraction data D30 into the first brightness, and outputs the converted extraction data D30. The second conversion model M2 is a machine learned model machine-learned to convert into the first brightness a region in an image shown by the learning image data in which the imaging object having the predetermined brightness or more does not exist without converting into the first brightness a region in which the imaging object exists. The second conversion model M2 converts into the first brightness a region in which an imaging object having the predetermined brightness or more does not exist in the image shown by the input extraction data D30 and outputs the converted extraction data D30.

When the extraction data D30 is an image that suppresses dazzle and does not include a monitoring target, the information processing apparatus 100 inputs the extraction data D30 to the first conversion model M1, and obtains the converted extraction data D30 output by the first conversion model M1. When the extraction data D30 is an image that includes a monitoring target, the information processing apparatus 100 inputs the extraction data D30 to the second conversion model M2, and obtains the converted extraction data D30 output by the second conversion model M2. The information processing apparatus 100 reflects the extraction data D30 in the image data D10 by blending a patch of the converted extraction data D30 with the first region E10-1 and the first region E10-2 of the image D11 shown by the image data D10. Thus, the information processing apparatus 100 can provide the image data D10 that indicates a converted image D12 having reduced dazzle of the light or the like having a low degree of importance in the image D11 and maintained monitoring target such as the tail lamp of the vehicle. As a result, the information processing apparatus 100 allows the observer to visually recognize an important image shown by the converted image data D10 and alleviate fatigue.

### Configuration example of moving body according to embodiment

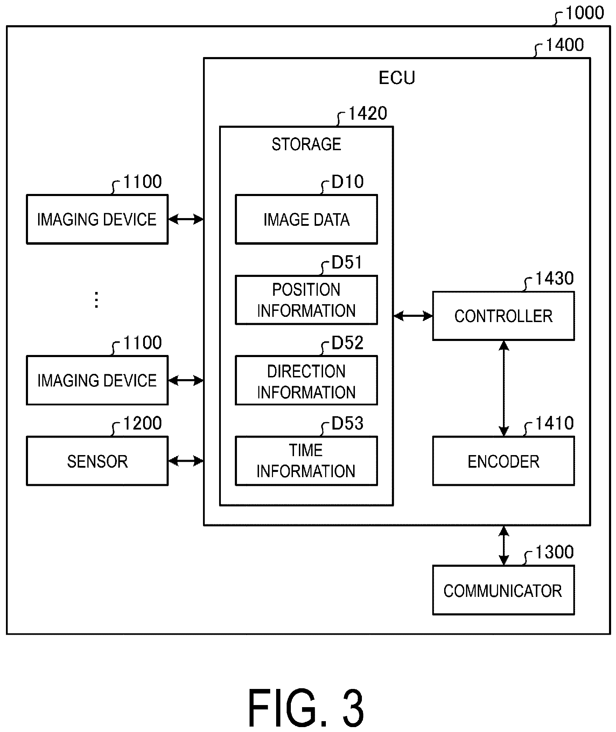

FIG. 3 is a configuration diagram illustrating an example of a configuration of the moving body 1000 illustrated in FIG. 1. As illustrated in FIG. 3, the moving body 1000 includes a plurality of imaging devices 1100, a sensor 1200, a communicator 1300, and an electronic control unit (ECU) 1400. The ECU 1400 is communicably connected to the imaging devices 1100, the sensor 1200, the communicator 1300, and the like.

The plurality of imaging devices 1100 are provided in the moving body 1000 and can image each of the front side, the rear side, the right side, and the left side of the moving body 1000. The plurality of imaging devices 1100 can electronically capture image data by using an image sensor such as a charge coupled device (CCD) or a complementary metal oxide semiconductor (CMOS). The plurality of imaging devices 1100 have different imaging directions. The plurality of imaging devices 1100 can image an environment around the moving body 1000 at a predetermined frame rate in real time, and supply the imaged image data D10 to the ECU 1400.

The sensor 1200 detects sensor information by which the state of the moving body 1000 can be identified. As the sensor 1200, for example, a sensor such as a position sensor or a gyro sensor can be used. A position sensor is exemplified as a sensor that acquires a position of absolute coordinates of a global positioning system (GPS) receiver or the like. The sensor 1200 can supply to the ECU 1400 sensor information including the position of the moving body 1000 (the position of the information processing apparatus 100) and an angular velocity. Thus, the ECU 1400 can acquire information such as the imaging positions and directions of the imaging devices 1100 based on the sensor information.

The communicator 1300 can communicate with, for example, other communication devices. The communicator 1300 can support various communication standards. The communicator 1300 can, for example, transmit and receive various data via a wired or wireless network. The communicator 1300 can supply received data to the ECU 1400. The communicator 1300 can transmit the image data D10 decoded by an encoder 1410 to the information processing apparatus 100 as a transmission destination instructed by the ECU 1400.

The ECU 1400 includes the encoder 1410, a storage 1420, and a controller 1430. The controller 1430 is electrically connected to the encoder 1410 and the storage 1420.

The encoder 1410 has a function of encoding the image data D10 under control of the controller 1430. The encoder 1410 converts the image data D10 transmitted by the moving body 1000 into a specific code based on a certain format. The encoder 1410 decodes the image data D10 input from the controller 1430 and supplies the decoded image data D10 to the communicator 1300.

The storage 1420 stores various data and programs. The storage 1420 includes, for example, a semiconductor memory element such as a RAM and a flash memory, a hard disk, and an optical disk. The storage 1420 stores the information and the like received via the communicator 1300. The storage 1420 stores, for example, various information such as the above-described image data D10, position information D51, direction information D52, and time information D53. The position information D51 includes, for example, information indicating an imaging position of the image data D10 detected by the sensor 1200. The direction information D52 includes, for example, information indicating the imaging direction of the image data D10 detected by the sensor 1200. The time information D53 includes, for example, information indicating a date and time, a time zone, and the like at which the image data D10 is imaged. The position information D51, the direction information D52, and the time information D53 are associated with the image data D10. The image data D10 may include the position information D51, the direction information D52, and the time information D53.

The storage 1420 may store, for example, machine learning data. The machine learning data may be data generated by machine learning. The machine learning data may include parameters generated by machine learning. Machine learning may be based on a technique of an Artificial Intelligence (AI) that can execute a specific task by training. More specifically, machine learning may be a technique where an information processing apparatus such as a computer learns a large amount of data and automatically constructs algorithms or models of performing tasks such as classification and/or prediction. As described herein, part of the AI may include machine learning. In this description, machine learning may include supervised learning of learning features or rules of input data based on correct answer data. Machine learning may include unsupervised learning of learning features or rules of input data in a state where there is no correct answer data. Machine learning may include reinforcement learning of giving a reward, a penalty, or the like and learning features or rules of input data. In this description, machine learning may be any combination of supervised learning, unsupervised learning, and reinforcement learning.

A concept of machine learning data according to the present embodiment may include an algorithm of outputting a predetermined inference (estimation) result by using an algorithm learned for input data. According to the present embodiment, as this algorithm, for example, other appropriate algorithms such as linear regression of predicting a relationship between a dependent variable and an independent variable, a Neural Network (NN) that mathematically models a human cranial nerve system neuron, a least squares method of squaring and calculating an error, a decision tree that converts a problem solution into a tree structure, and regularization that modifies data by a predetermined method can be used. In the present embodiment, deep neural network learning that is a type of neural network may be used. Deep neural network learning is a type of a neural network, and, in general, a neural network that means a network having a deep structure whose network hierarchy has one or more intermediate layers is called deep learning. Deep learning is frequently used as an algorithm that configures the AI.

The controller 1430 is an arithmetic processing device. Examples of the arithmetic processing device include, but are not limited to, a central processing unit (CPU), a system-on-a-chip (SoC), a micro control unit (MCU), a field-programmable gate array (FPGA), and a coprocessor. The controller 1430 is an integrated control unit that controls the moving body 1000.

More specifically, the controller 1430 executes instructions included in a program stored in the storage 1420 while referring, as appropriate, to information stored in the storage 1420. The controller 1430 has a function of causing the encoder 1410 to decode each piece of the image data D10 imaged by the plurality of imaging devices 1100, associating the image data D10 with the position information D51, the direction information D52, and the time information D53, and transmitting to the information processing apparatus 100. The controller 1430 transmits the image data D10 to the information processing apparatus 100 in real time via the communicator 1300 when the moving body 1000 is moving on the cruising route.

The functional configuration example of the moving body 1000 according to the embodiment has been described above. The above configuration described with reference to FIG. 3 is merely an example and the functional configuration of the moving body 1000 according to the embodiment is not limited thereto. The functional configuration of the moving body 1000 according to the embodiment can be flexibly modified according to specifications and application.

### Configuration example of information processing apparatus according to embodiment

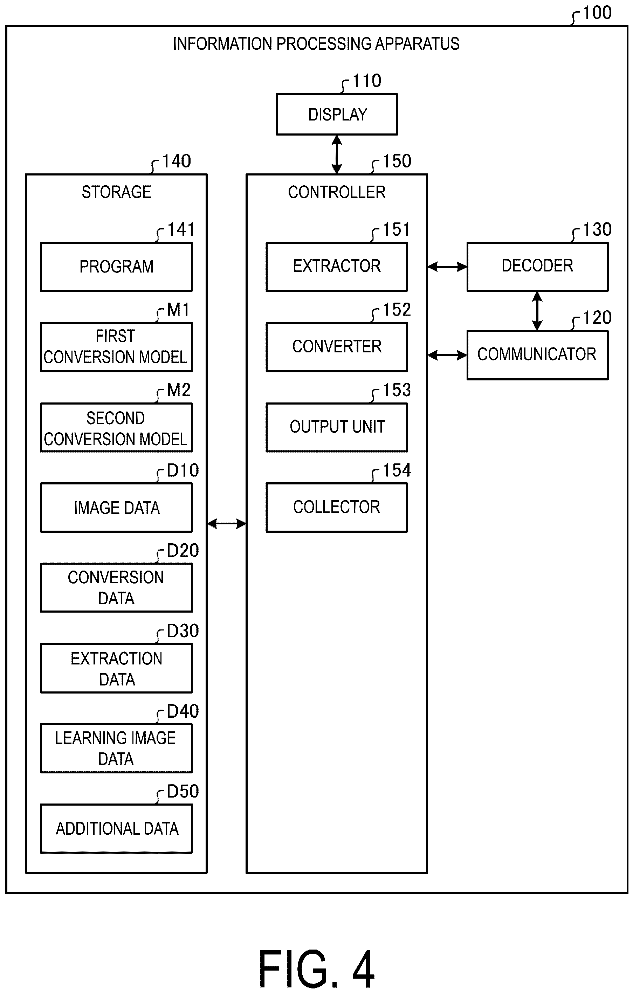

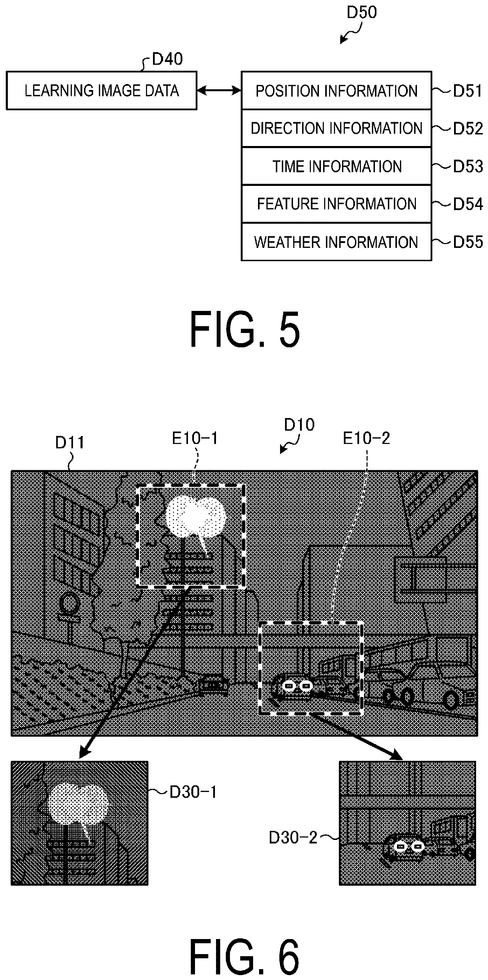

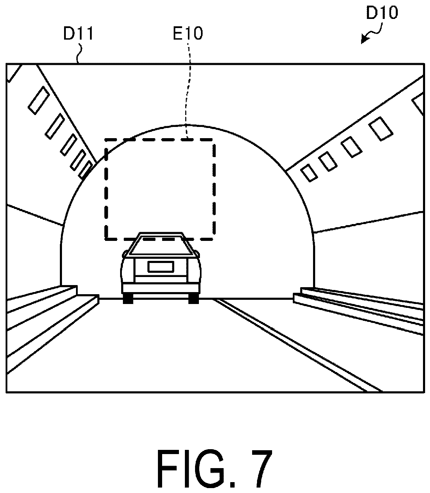

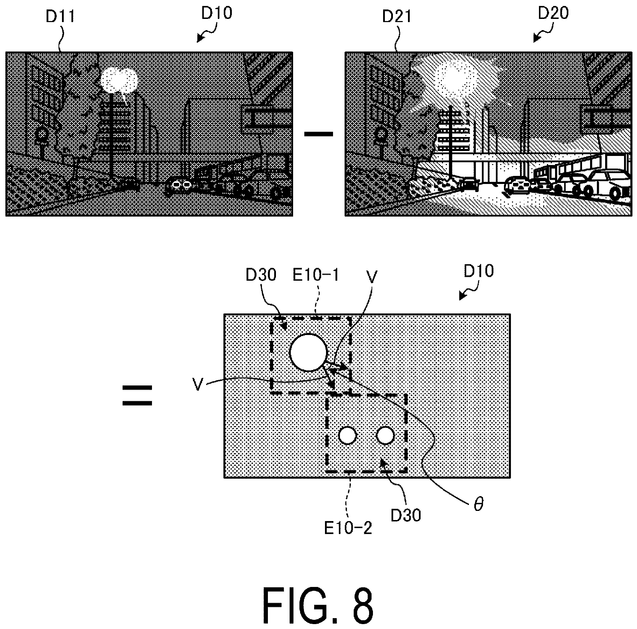

FIG. 4 is a diagram illustrating an example of a configuration of the information processing apparatus 100 illustrated in FIG. 1. FIG. 5 is a diagram illustrating an example of learning image data D40 and additional data D50. FIG. 6 is a diagram for explaining an extraction example of extraction of the first region E10 from the image D11 shown by the image data D10. FIG. 7 is a diagram for explaining another extraction example of extraction of the first region E10 from the image D11 shown by the image data D10. FIG. 8 is a diagram illustrating an example of a method of extracting the first region E10 of the information processing apparatus 100.

As illustrated in FIG. 4, the information processing apparatus 100 includes a display 110, a communicator 120, a decoder 130, a storage 140, and a controller 150. The controller 150 is electrically connected to the display 110, the communicator 120, the decoder 130, the storage 140, and the like.

The display 110 can display the image data D10 and the like transmitted by the moving body 1000 under control of the controller 150. The display 110 can display the image data D10 and the like decoded by the decoder 130 under control of the controller 150. The display 110 includes, for example, a display device such as a liquid crystal display and an organic Electro Luminescence (EL) display. For example, the display 110 can selectively display or simultaneously display the plurality of pieces of image data D10 transmitted by the plurality of moving bodies 1000. The display 110 may be implemented as a plurality of display devices.

The communicator 120 can communicate with, for example, the communicator 1300 of the moving body 1000 and other communication devices. The communicator 120 can support various communication standards. The communicator 120 can, for example, transmit and receive various data via a wired or wireless network. The communicator 120 can supply received data to the controller 150. The communicator 120 can transmit data to a transmission destination instructed by the controller 150.

The decoder 130 decodes the image data D10 under control of the controller 150. The decoder 130 decodes the image data D10 received by the communicator 120 based on a certain format and supplies the decoded image data D10 to the controller 150.

The storage 140 can store a program and data. The storage 140 is also used as a work area that temporarily stores a processing result of the controller 150. The storage 140 may include a freely selected non-transitory storage medium such as a semiconductor storage medium and a magnetic storage medium. The storage 140 may include a plurality of types of storage media. The storage 140 may include a combination of a portable storage medium such as a memory card, an optical disk, a magneto-optical disk, or the like and a device for reading a storage medium. The storage 140 may include a storage device used as a temporary storage area such as a Random Access Memory (RAM).

The storage 140 can store, for example, various data such as a program 141, the first conversion model M1, the second conversion model M2, the image data D10, conversion data D20, the extraction data D30, the learning image data D40, and the additional data D50. The program 141 is a program that causes the controller 150 to execute functions of implementing processing related to various operations of the information processing apparatus 100. The first conversion model M1 is a machine learned model machine-learned to convert the learning image data D40 into the first brightness. The second conversion model M2 is an image indicated by the learning image data D40 and is a machine learned model machine-learned to convert into the first brightness a region in which the imaging object having the predetermined brightness or more does not exist without converting into the first brightness a region in which the imaging object exists.

In the present disclosure, the first conversion model M1 may be a model that converts the image D11 in which the streetlight is turned on under the imaging condition of a time zone of a nighttime into the image D11 whose brightness is lowered. In the present disclosure, the second conversion model M2 may be a model that converts the image D11 into the image D11 in which brightness of the streetlight or the like is decreased without decreasing the brightness of the image D11 in which the tail lamp of the car or the like is turned on under the imaging condition of the time zone of the nighttime. That is, in the present disclosure, the first conversion model M1 decreases the brightness of the streetlight or the like that is not so important for the observer of the image D11. On the other hand, in the present disclosure, the second conversion model M2 does not decrease the brightness of a tail lamp or the like of a car that is important for security or the like for the observer of the image D11. In the present disclosure, by using the first conversion model M1 and the second conversion model M2, the brightness of the image D11 can be switched to a conversion method suitable for the degree of importance.

The image data D10 is the image data D10 transmitted by the moving body 1000. The storage 140 stores the image data D10 for each of the plurality of moving bodies 1000 in chronological order. The conversion data D20 is data indicating a gamma conversion image obtained by performing gamma correction processing on the image data D10. The extraction data D30 is data indicating an extraction image extracted from the first region E10 of the image D11 shown by the image data D10. The learning image data D40 is data indicating an image for machine learning having an imaging condition different from that of the extraction data D30 and having the feature of the extraction data D30. The learning image data D40 is training data of machine learning. In the present embodiment, the learning image data D40 includes data imaged by the moving body 1000.

The additional data D50 is data to be added to the image data D10 from which the extraction data D30 is extracted, the learning image data D40, or the like. The additional data D50 is data by which the imaging condition can be identified. As illustrated in FIG. 5, the additional data D50 includes the position information D51, the direction information D52, the time information D53, feature information D54, and weather information D55. The position information D51 includes information such as the latitude, the longitude, and GPS information indicating a position at which the learning image data D40 is imaged. The direction information D52 includes information indicating the imaging direction of the moving body 1000 that images the learning image data D40. The time information D53 includes information indicating a date and time, a time zone, and the like at which the learning image data D40 is imaged. The feature information D54 includes a recognition result of a subject image shown by the image D11, a feature vector of a shape object of the subject image, and information by which features such as a background of the subject image can be identified. The subject image includes, for example, an image of an object such as a streetlight, a lamp of a vehicle, or a traffic light that can emit light. The weather information D55 includes information indicating the weather such as sunny, cloudy, rainy, snowy, foggy, and a temperature when the learning image data D40 is imaged. The present disclosure does not limit the additional data D50 to the above and may include other additional data.

In an example illustrated in FIG. 5, the learning image data D40 and the additional data D50 are associated with each other, yet are not limited thereto. The additional data D50 can be associated with at least one of the image data D10 and the extraction data D30.

The information processing apparatus 100 can use the additional data D50 as a label of the learning image data D40 by associating the learning image data D40 and the additional data D50. Associating the additional data D50 with the image data D10 or the extraction data D30 allows the information processing apparatus 100 to collect the learning image data D40 that is similar to the additional data D50 and has a different imaging condition. Thus, the information processing apparatus 100 can collect the learning image data D40 based on the additional data D150 from the plurality of image data D10 transmitted by the moving body 1000.

As illustrated in Fig. 4, the controller 150 is an arithmetic processing device. For example, the arithmetic processing device includes, but is not limited to, a CPU, an SoC, an MCU, an FPGA, and a coprocessor. The controller 150 can comprehensively control the operation of the information processing apparatus 100 and implement various functions.

Specifically, the controller 150 can execute instructions included in the program 141 stored in the storage 140 while referring, as appropriate, to information stored in the storage 140. The controller 150 can control the functional units in accordance with the data and the instructions, thereby implementing various functions. The functional units include, but are not limited to, for example, the display 110 and the communicator 120.

The controller 150 includes functional units such as an extractor 151, a converter 152, an output unit 153, and a collector 154. The controller 150 implements functional units such as the extractor 151, the converter 152, the output unit 153, and the collector 154 by executing the program 141. The program 141 is a program for causing the controller 150 of the information processing apparatus 100 to function as the extractor 151, the converter 152, the output unit 153, and the collector 154.

The extractor 151 extracts the first region E10 having the brightness equal to or greater than the predetermined brightness in the image D11 shown by the image data D10 imaged by the imaging device 1100 of the moving body 1000. As illustrated in FIG. 6, the extractor 151 extracts, in the image D11, a region (first region E10-1) of the streetlight that is a region having the brightness at which the observer feels dazzling, a region (first region E10-2) in which the tail lamp is kept turned on, and the like. The first region E10-1 includes a region in which a lighting image included in the image D11 is changed. The first region E10-1 includes a region in which a lighting image included in the image D11 is replaced with a non-lighting image of the identical portion having a different imaging condition. The extractor 151 extracts extraction data D30-1 indicating an image of the first region E10-1. The first region E10-2 includes a region in which the lighting image included in the image D11 is maintained. The first region E10-2 includes a region in which the lighting image included in the image D11 is replaced with a lighting image having the different imaging condition and having the suppressed brightness. The extractor 151 extracts extraction data D30-2 indicating the image of the first region E10-2 and stores the extraction data D30-2 in the storage 140.

As illustrated in FIG. 7, the extractor 151 extracts the first region E10 having brightness equal to or greater than the predetermined brightness in the image D11 shown by the image data D10 imaged by the imaging device 1100 of the moving body 1000, and having a larger area of the region than a determination threshold value K. The determination threshold value K is a value for determining whether to decrease the brightness of the entire image D11. The first region E10 having the area larger than the determination threshold value K includes, for example, an over exposure region in the image D11. The extractor 151 extracts the extraction data D30 indicating the image D11 of the first region E10 whose area is larger than the determination threshold value K, and stores the extraction data D30 in the storage 140.

As illustrated in FIG. 8, the extractor 151 extracts the first region E10-1 and the first region E10-2 having the predetermined brightness or more from the image D11 based on a difference between the image data D10 and the conversion data D20 indicating a gamma conversion image obtained by performing gamma correction processing on the image data D10. The gamma correction processing includes, for example, processing of increasing the brightness of the image data D10. The extractor 151 extracts from the image data D10 the extraction data D30 indicating the image of the first region E10-1 and the first region E10-2. The extractor 151 vectorizes the image shown by the extraction data D30 by using the luminance-invariant feature amount, and calculates cosine similarity based on an angle θ formed between a vector V and the vector V. Thus, the extractor 151 can obtain the feature information D54 that enables identification of the similarity of the image shown by the extraction data D30. The feature amount includes, for example, a known SIFT feature amount and SURF feature amount. The extractor 151 associates the obtained feature information D54 with the extraction data D30 and store it in the storage 140.

As illustrated in FIG. 4, the converter 152 converts the extraction data D30 of the extracted first region E10 into the first brightness lower than the predetermined brightness. The converter 152 converts the input extraction data D30 by using the conversion model M machine-learned to convert a plurality of pieces of learning image data D40 having a different imaging condition from that of the extraction data D30 and having the feature of the extraction data D30 into the first brightness. That is, the converter 152 converts the extraction data D30 into the first brightness by inputting the extraction data D30 into the conversion model M.

The converter 152 converts the extraction data D30 satisfying an input first conversion condition using the first conversion model M1. For example, a region that needs to be monitored by the observer in the image D11 imaged by the moving body 1000 is a region that is from the vicinity of the center to a lower side and whose center to upper side do not need to be monitored in the image D11 obtained by capturing the front of the moving body 1000. Accordingly, the first conversion condition includes a condition regarding whether the first region E10 exists in the conversion region in the image D11. The conversion region includes, for example, a region above 2/3 in the vertical direction of the image D11. The converter 152 converts the extraction data D30 satisfying an input second conversion condition using the second conversion model M2. The second conversion condition includes a condition regarding whether the first region E10 exists in a monitoring region in the image D11. The monitoring region includes, for example, a region below 2/3 in the vertical direction of the image D11. The converter 152 reflects the extraction data D30 in the image data D10 by blending a patch of the converted extraction data D30 with the first region E10 of the image D11 shown by the image data D10.

When the extractor 151 extracts the first region E10, the converter 152 performs brightness reduction processing of reducing the brightness of all pixels in the image D11 shown by the image data D10 if the area of the first region E10 is larger than the determination threshold value. The converter 152 replaces the original image data D10 stored in the storage 140 with the converted image data D10.

The output unit 153 outputs the image data D10 in which the converted extraction data D30 is reflected. The output unit 153 controls the display 110 to output (display) the changed image data D10. Thus, the display 110 can display the image data D10 in which the high-brightness region is suppressed.

The collector 154 collects the plurality of pieces of learning image data D40 having the imaging condition different from that of the extraction data D30 and having the feature of the extraction data D30. Based on the additional data D50 added to the extraction data D30, the collector 154 collects the learning image data D40 indicating an image having similar features. When, for example, the moving body 1000 is a route bus, the route bus runs on a specific cruising route over and over again, so that the image data D10 can be captured at the same point and in different time zones. There is a high probability that the image data D10 imaged by the moving body 1000 at different dates and times, in time zones, on different weathers, and the like at the imaging position shown by the additional data D50 includes an image having features, backgrounds, and the like similar to those of the extraction data D30. For example, an image on a rainy day has different brightness and clarity compared to an image on a sunny day. Accordingly, the collector 154 collects, from the image data D10 imaged by the moving body 1000, the plurality of pieces of learning image data D40 having the different imaging condition from that of the extraction data D30 and having the feature of the extraction data D30 into the first brightness. The collector 154 associates the collected learning image data D40 with the additional data D50 by which features or the like of the image can be identified and stores it in the storage 140. This allows the information processing apparatus 100 to improve the reliability of the first conversion model M1 and the second conversion model M2 machine-learned to convert the plurality of pieces of learning image data D40 into the first brightness.

The functional configuration example of the information processing apparatus 100 according to the present embodiment has been described above. The above configuration described with reference to FIG. 4 is merely an example, and the functional configuration of the information processing apparatus 100 according to the present embodiment is not limited to the example. The functional configuration of the information processing apparatus 100 according to the present embodiment can be flexibly changed in accordance with specifications and operations.

### Processing procedure example of moving body

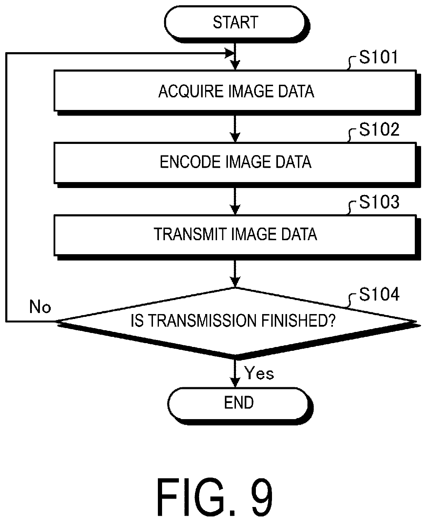

FIG. 9 is a flowchart illustrating an example of a processing procedure executed by the moving body 1000 according to the embodiment. The processing procedure illustrated in FIG. 9 is implemented by the controller 1430 of the moving body 1000 by executing a program. The processing procedure illustrated in FIG. 9 is executed when the moving body 1000 cruises. For simplicity of the description, the processing procedure illustrated in FIG. 9 indicates a procedure for transmitting the image data D10 of the imaging device 1100 that images the front of the moving body 1000.

As illustrated in FIG. 9, the moving body 1000 acquires the image data D10 (step S101). For example, the moving body 1000 acquires the image data D10 from the imaging device 1100, and stores in the storage 1420 the image data D10 in which the position information D51 based on sensor information acquired from the sensor 1200, the direction information D52 indicating the imaging direction of the imaging device 1100, and the time information D53 are associated. When the processing in step S101 ends, the moving body 1000 advances processing to step S102.

The moving body 1000 encodes the image data D10 (step S102). For example, the moving body 1000 uses the encoder 1410 to encode transmission data for transmitting the image data D10, the position information D51, the direction information D52, the time information D53, and the like. When the processing in step S102 ends, the moving body 1000 advances processing to step S103.

The moving body 1000 transmits the image data D10 (step S103). For example, the moving body 1000 transmits the image data D10 to the information processing apparatus 100 by instructing the communicator 1300 to transmit the encoded transmission data to the information processing apparatus 100. When the processing in step S103 ends, the moving body 1000 advances processing to step S104.

The moving body 1000 determines whether the transmission ends (step S104). For example, the moving body 1000 determines that the transmission ends if a transmission end condition of the image data D10 is satisfied. As the transmission end condition, for example, a condition such as an end timing of cruising movement of the moving body 1000 or a preset end timing is set. If determining that the transmission ends (No in step S104), the moving body 1000 returns the processing to step S101 already described and continues the processing. If determining that transmission the transmission ends (Yes in step S104), the moving body 1000 ends the processing procedure illustrated in FIG. 9.

### Processing procedure example of information processing apparatus

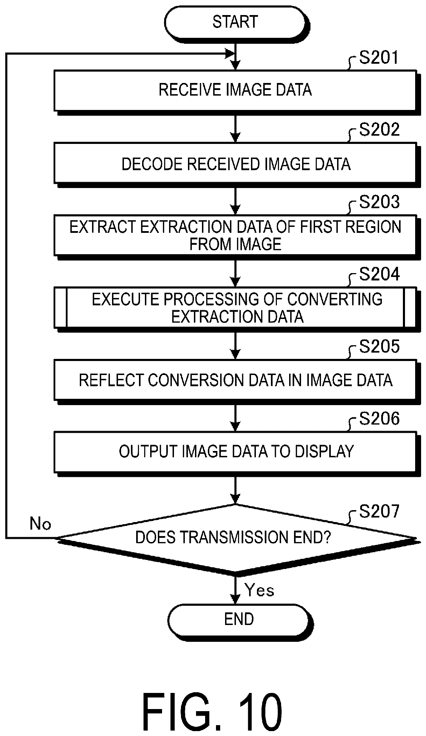

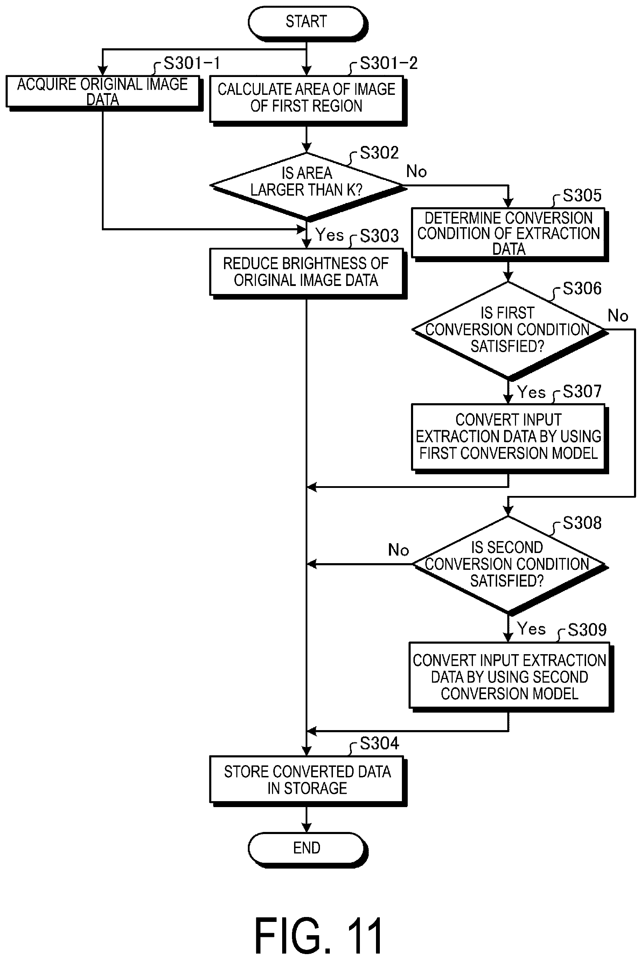

FIG. 10 is a flowchart illustrating an example of a processing procedure executed by the information processing apparatus 100 according to the embodiment. FIG. 11 is a flowchart illustrating an example of a processing procedure of conversion processing illustrated in FIG. 10. The processing procedures illustrated in FIGs. 10 and 11 are implemented by the controller 150 of the information processing apparatus 100 by executing the program 141. The processing procedures illustrated in FIGs. 10 and 11 are executed when the observer monitors the moving body 1000. For simplicity of the description, the processing procedures illustrated in FIGs. 10 and 11 are procedures of processing the image data D10 transmitted from the one moving body 1000.

As illustrated in FIG. 10, the information processing apparatus 100 receives the image data D10 (step S201). For example, the information processing apparatus 100 receives the image data D10 transmitted by the moving body 1000 via the communicator 120. When receiving the image data D10, the information processing apparatus 100 advances processing to step S202.

The information processing apparatus 100 decodes the received image data D10 (step S202). For example, the information processing apparatus 100 decodes the image data D10, the position information D51, the direction information D52, the time information D53, and the like by decoding the transmission data received by the communicator 120 by the decoder 130. When associating the decoded image data D10 with the position information D51, the direction information D52, and the time information D53, and the information by which the moving body 1000 and storing it in the storage 140, the information processing apparatus 100 advances processing to step S203.

The information processing apparatus 100 extracts the extraction data D30 of the first region E10 from the image D11 (step S203). For example, the information processing apparatus 100 extracts the first region E10 having the brightness equal to or greater than the predetermined brightness from the image D11 shown by the decoded image data D10, and extracts the extraction data E30 indicating the image of the first region E10. The information processing apparatus 100 extracts the first region E10 based on a difference between the image data D10 and the conversion data D20 converted by performing gamma correction processing on the image data D10, and extracts the extraction data E30 indicating the image of the first region E10. The information processing apparatus 100 associates the extracted extraction data D30 with the image data D10 and store it in the storage 140. The information processing apparatus 100 generates the additional data D50 and associates the additional data D50 with the extraction data D30 and the image data D10. When the processing in step S203 ends, the information processing apparatus 100 advances processing to step S204.

The information processing apparatus 100 executes processing of converting the extraction data D30 (step S204). The information processing apparatus 100 converts the brightness of the extraction data D30 by executing the conversion processing illustrated in FIG. 11.

As illustrated in FIG. 11, the information processing apparatus 100 acquires the original image data D10 (step S301-1). For example, the information processing apparatus 100 acquires from the storage 140 the image data D10 of an extraction source associated with the extraction data D30. The information processing apparatus 100 calculates an area of the image of the first region E10 (step S301-2). For example, the information processing apparatus 100 calculates the area based on the vertical and horizontal lengths of the first region E10.

The information processing apparatus 100 determines whether the area in step S301-2 is larger than the determination threshold value K (step S302). If determining that the area is larger than the determination threshold value K (Yes in step S302), the information processing apparatus 100 regards the extraction data D30 as an over exposure image and advances processing to step S303. Over exposure may mean that the brightness of a captured image exceeds the brightness of an imaging target. Over exposure may occur when a dynamic range limit of the imaging device 1100 is exceeded.

When processing in step S301-1 ends and it is determined in step S302 that the area is larger than the determination threshold value K, the information processing apparatus 100 reduces the brightness of the original image data D10 (step S303). For example, the information processing apparatus 100 executes image processing of decreasing the entire brightness of the original image data D10 acquired in step S301-1 to the brightness that reduces dazzle. The information processing apparatus 100 stores the converted data in the storage 140 (step S304). For example, the information processing apparatus 100 stores in the storage 140 the original image data D10 converted as the conversion data D20. When the processing in step S304 ends, the information processing apparatus 100 ends the processing procedure illustrated in FIG. 11 and returns to the processing in step S204 illustrated in FIG. 10.

If determining that the area is not larger than the determination threshold value K (No in step S302), the information processing apparatus 100 advances processing to step S305. The information processing apparatus 100 determines the conversion condition of the extraction data D30 (step S305). For example, the information processing apparatus 100 determines that the first conversion condition is satisfied when the first region E10 exists in the conversion region in the image D11. For example, the information processing apparatus 100 determines that the second conversion condition is satisfied when the first region E10 exists in the monitoring region in the image D11. For example,, the information processing apparatus 100 determines the conversion condition for each of the plurality of pieces of extraction data D30 when the plurality of pieces of extraction data D30 exists. When the processing in step S305 ends, the information processing apparatus 100 advances processing to step S306.

The information processing apparatus 100 determines whether the first conversion condition is satisfied (step S306). If determining that the first conversion condition is satisfied based on the determination result in step S305 (Yes in step S306), the information processing apparatus 100 advances processing to step S307. The information processing apparatus 100 converts the input extraction data D30 using the first conversion model M1 (step S307). For example, the information processing apparatus 100 inputs to the first conversion model M1 the extraction data D30 satisfying the first conversion condition, the first conversion model M1 converts the extraction data D30 into the first brightness, and the data output by the first conversion model M1 is the converted extraction data D30. When the processing in step S307 ends, the information processing apparatus 100 advances processing to step S304. The information processing apparatus 100 stores the converted data in the storage 140 (step S304). For example, the information processing apparatus 100 stores in the storage 140 the extraction data D30 converted as the conversion data D20. When the processing in step S304 ends, the information processing apparatus 100 ends the processing procedure illustrated in FIG. 11 and returns to the processing in step S204 illustrated in FIG. 10.

If determining that the first conversion condition is not satisfied based on the determination result in step S305 (No in step S306), the information processing apparatus 100 advances processing to step S308 described later.

The information processing apparatus 100 determines whether the second conversion condition is satisfied (step S308). If determining that the second conversion condition is not satisfied based on the determination result in step S305 (No in step S308), the information processing apparatus 100 advances processing to step S304. The information processing apparatus 100 stores the converted data in the storage 140 (step S304). For example, the information processing apparatus 100 may store in the storage 140 information indicating that the data is not converted or may store in the storage 140 the extraction data D30 that is not converted as the conversion data D20. When the processing in step S304 ends, the information processing apparatus 100 ends the processing procedure illustrated in FIG. 11 and returns to the processing in step S204 illustrated in FIG. 10.

If determining that the second conversion condition is satisfied based on the determination result in step S305 (Yes in step S308), the information processing apparatus 100 advances processing to step S309. The information processing apparatus 100 converts the input extraction data D30 using the second conversion model M2 (step S309). For example, the information processing apparatus 100 inputs to the second conversion model M2 the extraction data D30 satisfying the second conversion condition, and the second conversion model M2 converts into the first brightness the region of the extraction data D30 in which the imaging object having the predetermined brightness or more does not exist without converting into the first brightness the region in which the imaging object exists. The information processing apparatus 100 converts the data output by the second conversion model M2 into the converted extraction data D30. When the processing in step S309 ends, the information processing apparatus 100 advances processing to step S304. The information processing apparatus 100 stores the converted data in the storage 140 (step S304). For example, the information processing apparatus 100 stores in the storage 140 the extraction data D30 converted as the conversion data D20. When the processing in step S304 ends, the information processing apparatus 100 ends the processing procedure illustrated in FIG. 11 and returns to the processing in step S204 illustrated in FIG. 10.

Returning to FIG. 10, when the conversion processing in step S204 ends, the information processing apparatus 100 advances processing to step S205. The information processing apparatus 100 reflects the conversion data D20 in the image data D10 (step S205). For example, the information processing apparatus 100 reflects the extraction data D30 in the image data D10 by blending the patch of the converted extraction data D30 into the first region E10 of the image D11 shown by the image data D10. When the processing in step S205 ends, the information processing apparatus 100 advances processing to step S206.

The information processing apparatus 100 outputs the image data D10 to the display 110 (step S206). For example, the information processing apparatus 100 controls the display 110 to output (display) the changed image data D10. For example, the information processing apparatus 100 may output the converted image data D10 to an external device via the communicator 120. When the processing in step S206 ends, the information processing apparatus 100 advances processing to step S207.

The information processing apparatus 100 determines whether the transmission ends (step S207). For example, the information processing apparatus 100 determines that the transmission ends if a transmission end condition of the image data D10 is satisfied. As the transmission end condition, for example, a condition such as a duration time during which the image data D10 is not received via the communicator 120 or a preset end timing is set. If determining that the transmission does not end (No in step S207), the information processing apparatus 100 returns the processing to step S201 already described and continues the processing. If determining that the transmission ends (Yes in step S207), the information processing apparatus 100 ends the processing procedure illustrated in FIG. 10.

As described above, the information processing apparatus 100 extracts the first region E10 having the brightness equal to or greater than the predetermined brightness in the image D11 shown by the imaged image data D10, and converts the brightness of the extraction data D30 of the first region E10 into the lower brightness. The information processing apparatus 100 outputs to the display 110 the image data D10 in which the converted extraction data D30 is reflected. This allows the information processing apparatus 100 to display, on the display 110, the image data D10 having brightness equal to or greater than the predetermined brightness is reduced, allowing the degree of fatigue of the observer to be alleviated.

The information processing apparatus 100 can convert, by using the conversion model M machine-learned to convert the plurality of pieces of learning image data D40 having the imaging condition different from that of the extraction data D30 and having the feature of the extraction data D30, the input extraction data into the first brightness. Thus, the information processing apparatus 100 may input the extraction data D30 to the conversion model M, so that a processing load for monitoring the image data D10 of the plurality of moving bodies 1000 can be suppressed.

The information processing apparatus 100 can convert the extraction data D30 satisfying the input first conversion condition using the first conversion model M1, and convert the extraction data D30 satisfying the input second conversion condition using the second conversion model M2. This allows the information processing apparatus 100 to convert or not to convert the brightness of a subject image in the image data D10, allowing a priority subject image of high importance to be maintained.

The information processing apparatus 100 compares the image data D10 and the conversion data D20 obtained by performing gamma correction processing on the image data D10 to specify the first region E10 of the image D11 and extracts the extraction data D30 of the first region E10 from the image data D10. Thus, the information processing apparatus 100 can detect a dazzling region (high-brightness region) based on the difference between the image data D10 and the conversion data D20 by setting a high gamma value of the gamma correction processing.

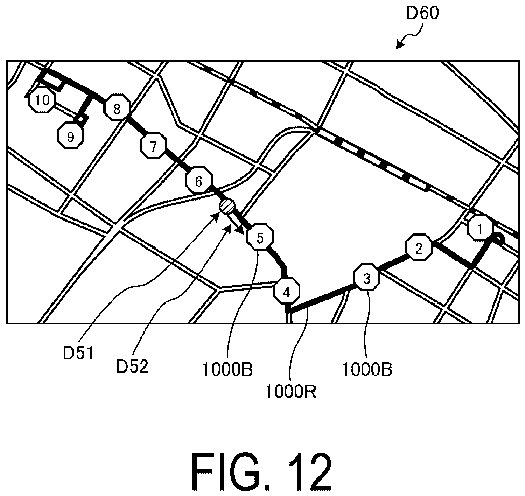

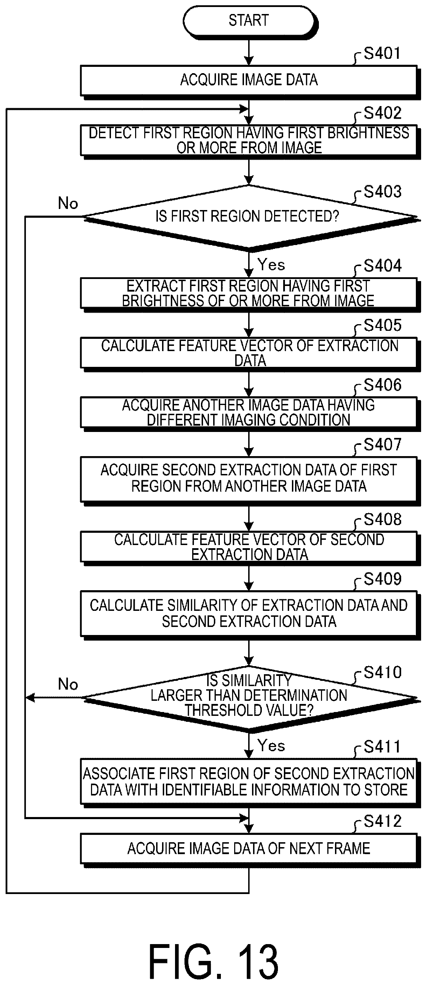

FIG. 12 is a diagram illustrating an example of a cruising route 1000R of the moving body 1000. FIG. 13 is a flowchart illustrating an example of a processing procedure of collection processing executed by the information processing apparatus 100 according to the embodiment. The processing procedure illustrated in FIG. 13 is implemented by the controller 150 of the information processing apparatus 100 by executing the program 141. The processing procedure illustrated in FIG. 13 is executed when the observer monitors the moving body 1000, and execution ends when finishing the processing procedure is instructed.

Route data D60 illustrated in FIG. 12 includes information by which the cruising route 1000R that is a predetermined route of the moving body 1000, positions of a plurality of stops 1000B and the like, and a cruising schedule can be identified. The moving body 1000 travels on the cruising route 1000R over and over again, so that the moving body 1000 can capture the image data D10 at the same point and in different time zones. For example, when the position information D51, the direction information D52, and the time information D53 are associated with the extraction data D30, the information processing apparatus 100 collects the learning image data D40 from the image data D10 having the same position information D51 and direction information D52 and having different imaging conditions such as the time zone or the time indicated by the time information D53 and the weather indicated by the weather information D55.

As illustrated in FIG. 13, the information processing apparatus 100 acquires the image data D10 (step S401). For example, the information processing apparatus 100 acquires the decoded image data D10 received via the communicator 120. The information processing apparatus 100 detects the first region E10 having the first brightness or more from the image D11 (step S402). For example, the information processing apparatus 100 detects the first region E10 having the brightness equal to or greater than the predetermined brightness from the image D11. When storing a detection result of the first region E10 in the storage 140, the information processing apparatus 100 advances processing to step S403.

The information processing apparatus 100 determines whether the first region E10 is detected based on the detection result in step S403 (step S403). If determining that the first region E10 is detected (Yes in step S403), the information processing apparatus 100 advances processing to step S404. The information processing apparatus 100 extracts the first region E10 having the first brightness or more from the image D11 (step S404). For example, the information processing apparatus 100 extracts the extraction data D30 indicating the first region E10 of the image E11 from the image data D10. When storing the extracted extraction data D30 in the storage 140, the information processing apparatus 100 advances processing to step S405.

The information processing apparatus 100 calculates a feature vector of the extraction data D30 (step S405). For example, the information processing apparatus 100 calculates the feature vector by using a luminance-invariant feature amount for the image D11 shown by the extraction data D30. The information processing apparatus 100 associates the feature information D54 including the calculated feature vector, an object, and a background as the additional data D50 with the extraction data D30 and store it in the storage 140. The information processing apparatus 100 acquires the weather information D55 indicating the weather at a position at which the moving body 1000 is moving and associates the weather information D55 as the additional data D50 with the extraction data D30 and store it in the storage 140. When the processing in step S405 ends, the information processing apparatus 100 advances processing to step S406.

The information processing apparatus 100 acquires the another image data D10 having a different imaging condition (step S406). For example, based on the additional data D50 associated with the image data D10, the information processing apparatus 100 acquires the another image data D10 having the same imaging position and imaging direction and having different time zones, weather conditions, and the like. The information processing apparatus 100 acquires the second extraction data of the first region E10 from the another image data D10 (step S407). For example, the information processing apparatus 100 extracts the second extraction data indicating the first region E10 of the image D11 from the another image data D10. When storing the extracted second extraction data in the storage 140, the information processing apparatus 100 advances processing to step S408.

The information processing apparatus 100 calculates a feature vector of the second extraction data (step S408). For example, the information processing apparatus 100 calculates a feature vector by using a luminance-invariant feature amount for the image D11 shown by the second extraction data. The information processing apparatus 100 calculates the similarity between the extraction data and the second extraction data (step S409). For example, the information processing apparatus 100 calculates the similarity of the feature vectors by using a calculation program, machine learning, or the like, and stores a calculation result in the storage 140. When the processing in step S409 ends, the information processing apparatus 100 advances processing to step S410.

The information processing apparatus 100 determines whether the similarity is larger than the determination threshold value (step S410). The determination threshold value for the similarity is a threshold value set to determine whether features are identical. If determining that the similarity is larger than the determination threshold value (Yes in step S410), the information processing apparatus 100 advances processing to step S411. The information processing apparatus 100 associates the first region E10 of the second extraction data with identifiable information and stores it (step S411). For example, the information processing apparatus 100 refers to the additional data D50 associated with the image data D10 that is an extraction source of the second extraction data, and changes the feature information D54 of the additional data D50 to indicate the features of the second extraction data. The information processing apparatus 100 associates the second extraction data as the learning image data D40 with the additional data D50 and store it in the storage 140. When the processing in step S411 ends, the information processing apparatus 100 advances processing to step S412 described later.

If determining that the similarity is not larger than the determination threshold value (No in step S410), the information processing apparatus 100 advances processing to step S412. The information processing apparatus 100 acquires the image data D10 of a next frame (step S412). For example, the information processing apparatus 100 acquires the image data D10 of the next frame transmitted by the moving body 1000 via the communicator 120. When the processing in step S412 ends, the information processing apparatus 100 returns processing to step S402 already described and continues the processing.

As described above, the information processing apparatus 100 can collect a large amount of the learning image data D40 suitable for learning of the extraction data D30 based on the additional data D50 from the image data D10 transmitted by the moving body 1000 that is cruising around. For example, the image data D10 imaged at the same position and in the same imaging direction is likely to have different brightness, visibility, and the like by different imaging conditions such as a time zone and weather even when the image D11 has a similar context. The information processing apparatus 100 can collect the learning image data D40 having features similar to the features indicated by the additional data D50 and having different imaging conditions from the image data D10 imaged on the cruising route 1000R shown by the route data D60. Thus, the conversion model M can perform machine learning on a large number of items of the learning image data D40, so that the information processing apparatus 100 can further improve the reliability of an output of the conversion model M.

The above-described information processing apparatus 100 may be configured to recognize an imaging object in the image data D10 based on RGB information, a context, or the like of the image D11 shown by the image data D10, and switch between the first conversion model M1 and the second conversion model M2 used for conversion based on a recognition result.

Although a case where the above-described information processing apparatus 100 implements the function of converting the brightness of the image data D10 and the function of collecting the learning image data D40 is described, the information processing apparatus 100 is not limited to this. For example, the information processing apparatus 100 may have only a function of converting the brightness of the image data D10. For example, the information processing apparatus 100 may implement the two functions using separate apparatuses. For example, the information processing apparatus 100 may implement the function of collecting the learning image data D40 using the moving body 1000.

Although a case where the above-described information processing apparatus 100 is provided outside the moving body 1000, the information processing apparatus 100 is not limited to this. The information processing apparatus 100 may be mounted on the moving body 1000, or may be implemented as the ECU 1400, an in-vehicle device, or the like mounted on the moving body 1000.

Embodiments have been described in order to fully and clearly disclose the technique according to the appended claims. However, the appended claims are not to be limited to the embodiments described above and may be configured to embody all variations and alternative configurations that those skilled in the art may make within the underlying matter set forth herein. A person skilled in the art can easily make various variations or modifications of the present disclosure based on the present disclosure. Accordingly, these variations and modifications are included within the scope of the present disclosure. For example, in each embodiment, each functional unit, each means, each step, and the like can be added to another embodiment or replaced with each functional unit, each means, each step, and the like of another embodiment so as not to be logically inconsistent. In each embodiment, a plurality of functional units, means, steps, and the like can be combined into one or divided. Each of the embodiments of the present disclosure described above is not limited to being implemented faithfully to each of the embodiments described above, and can be implemented by appropriately combining each feature or omitting a part thereof.

### REFERENCE SIGNS

1 System
100 Information processing apparatus
110 Display
120 Communicator
130 Decoder
140 Storage
141 Program
150 Controller
151 Extractor
152 Converter
153 Output unit
154 Collector
1000 Moving body
1000R Cruising route
1100 Imaging device
1200 Sensor
1300 Communicator
1400 ECU
1410 Encoder
1420 Storage
1430 Controller
D10 Image data
D11 Image
D20 Conversion data
D30 Extraction data
D40 Learning image data
D50 Additional data
D51 Position information
D52 Direction information
D53 Time information
D54 Feature information
D55 Weather information
D60 Route data
E10 First region

## Claims

1. An information processing apparatus, comprising:
an extractor configured to extract a first region having brightness equal to or greater than predetermined brightness in an image shown by image data imaged by a moving body;
a converter configured to convert extraction data of the first region extracted into first brightness lower than the predetermined brightness; and
an output unit configured to output the image data in which the extraction data converted is reflected.

2. The information processing apparatus according to claim 1, wherein the converter converts, by using a conversion model machine-learned to convert a plurality of pieces of learning image data having an imaging condition different from that of the extraction data and having a feature of the extraction data, the extraction data input into the first brightness.

3. The information processing apparatus according to claim 2, wherein
the conversion model comprises
a first conversion model machine-learned to convert an image in the first region shown by the learning image data into the first brightness and
a second conversion model machine-learned to convert a region of the first region in which an imaging object having the predetermined brightness or more does not exist into the first brightness without converting a region in which the imaging object having the predetermined brightness or more exists in the image shown by the learning image data into the first brightness, and
the converter converts the extraction data satisfying an input first conversion condition by using the first conversion model and converts the extraction data satisfying an input second conversion condition by using the second conversion model.

4. The information processing apparatus according to claim 2, wherein
the image data imaged is image data imaged by an imaging device that is provided in a moving body periodically moving on a predetermined route and can image an outside of the moving body, and
the learning image data is data based on the image data imaged on the predetermined route.

5. The information processing apparatus according to claim 4, wherein the imaging condition comprises a time zone.

6. The information processing apparatus according to claim 2, wherein
the image data and the learning image data comprise, as additional data, at least one selected from the group consisting of
information of a position at which the image data and the learning image data are acquired,
direction information of a direction in which the image data and the learning image data are imaged,
time information of time at which the image data and the learning image data are imaged,
weather information of weather in imaging the image data and the learning image data, and
feature information by which a feature of a subject image of the image data and the learning image data can be identified.

7. The information processing apparatus according to claim 1, wherein the extractor compares the image data and conversion data obtained by performing gamma correction processing on the image data to specify the first region of the image and extracts the extraction data of the first region from the image data.

8. The information processing apparatus according to claim 1, wherein
the converter
decreases brightness of a streetlight shown in the image and
suppresses a decrease in the brightness of the streetlight compared to a decrease in brightness of at least one selected from the group consisting of a traffic light, a lamp of a car, a light at a construction site, and a light emitter worn by a person shown in the image.

9. An information processing method comprising:
at a computer,
extracting a first region having brightness equal to or greater than predetermined brightness in an image shown by image data imaged by a moving body;
converting extraction data of the first region extracted into first brightness lower than the predetermined brightness; and
outputting the image data in which the extraction data converted is reflected.

10. A program causing a computer to execute:
extracting a first region having brightness equal to or greater than predetermined brightness in an image shown by image data imaged by a moving body;
converting extraction data of the first region extracted into first brightness lower than the predetermined brightness; and
outputting the image data in which the extraction data converted is reflected.
